# EUROPEAN PATENT SPECIFICATION

(11) **EP 1 474 968 B1**
(45) Date of publication and mention of the grant of the patent: **24.08.2005**
(21) Application number: 03425174.4
(22) Date of filing: 19.03.2003
(51) Int. Cl.: A01G 13/00

(54) **Cellular structure universally directed for holding anti-parasite products**
Zellstruktur universalerweise gerichtet zum Halten von antiparasitären Substanzen
Structure cellulaire universellement dirigée pour soutenir des substances anti-parasites

(43) Date of publication of application: 10.11.2004
(73) Proprietor: Spadavecchia, Pietro, 84081 Baronissi (SA) (IT)
(72) Inventor: Spadavecchia, Pietro, 84081 Baronissi (SA) (IT)
(74) Representative: Turini, Laura

(56) References cited:
- WO-A-99/60848
- GB-A- 270 470
- US-A- 1 769 409
- US-A- 3 972 993

## Description

### Technical Field

The present invention concerns the technical sector relating the industrial production of accessories used in the agricultural sector and in flower and plant culture, as well as in gardening in general, aimed at protecting environments and plantations from parasite attack, particularly flies, mosquitoes, or other insects from dipterous family. This invention is also suitable as protection from other insect families, attracted by poisonous baits, like wasps and hornets.

### Background Art

The innovative construction concept of this structure makes use of the existing products called "attracted and killed", with an efficacy never reached so far; such products, as known, or however as denoted by their name, have a primary attractive effect, thanks to the fumes issued by the liquid substances they are made of; since these substances are sprayed near the plant to be protected, it's important this product lasts in order to guarantee its protective function. The extent of the products entails its real efficacy value and, in contact with the attacking insect, causes its specific toxicity and gets rid of it, achieving the protection of the plant.

These known products, with specific toxicity against the parasite, are nowadays the best guarantee in the protection of the plant. Obviously, the efficacy of this system depends on the lapse of time the product remains near the plant to be protected; today, generally, the practical procedure consists in spraying the product directly onto the plant or onto a wall inside an industrial or house environment.

This fact involves the relevant drawback of attacking directly the plant too, with serious consequences for the fruits that are inevitably contaminated by the anti-parasite substance.

Even when the substance is sprayed onto a part of a wall or onto a panel placed on it, we get the immediate result that this wall is soiled and, in any case, the substance is not hold, unless for a minimum part. As a matter of fact, the effect of the product is limited in time, because it cannot resist on a smooth impermeable surface, as the one normally used for this purpose, i.e. in plastic material, where we know liquids do not perfectly adhere. Which implies the need to repeat more times the application of the product, in order to get a safe anti-parasite protection.

We've got the same kind of problem when the substance is sprayed onto the plant. Despite various handmade tactics for improving the grip of the product to the plant, nowadays there is not any product or specific tactic able to guarantee a sufficient hold of the product in time. Which implies the need to repeat the spraying of the product in short lapses of time, with the risk, in the opposite case, to cancel the protective operation because of the fast evaporation and/or dispersion of the product, followed by the attack of the parasite to the plant.

The international patent application No. PCT/GB99/01631 (Publication No. WO99/60848) discloses a method of controlling a pest, luring it onto a surface bearing a particulate killing material. According to this method, the pest is attracted onto the surface, coated with the powder by its moving and killed. This method comprises an apparatus incorporating a particulate killing material or behaviour-modifying agent. Said apparatus, which is not manufactured, is used to monitor the presence of pests, so as to select the best anti-parasite action to adopt. Said apparatus is however unsuitable to be used in order to kill all the insects, being too bulky and impossible to use directly onto plants.

The present invention aims at eliminating the above-mentioned and other drawbacks, supplying an embossed multi-cells structure, mono or bilateral, made of various materials, used to wrap or however isolate plants or any other thing we want to protect from the violent parasite attack, which, particularly in case of economic activities meant for this kind of trade, represents one of the principal negative item in the balance-sheet of the company.

### Disclosure of invention

This invention specifically aims at improving the anti-parasite function, with the consequent protective function of all the various kinds of plants, from large industrial food productions, until small aesthetic garden plants. In particular, it is perfectly suitable for the protection against fly parasites of the crops like olives, fruits and citrus fruits, vegetables and flowers.

It is also suitable to be used in private rooms, inside houses, restaurants, establishments for the production of foodstuffs such as dairy, food factories, stables, paddocks for animals, milking places and in any other environment where there are flies, mosquitoes or other parasites and it's necessary to throw them off.

This product is particularly easy to apply, and certainly effective, therefore it can be also used by non-experts of this sector, in such a rising field as gardening that has spreading even in single houses.

Reduced to its essential structure and with reference to the figures of the enclosed drawings, a protective structure for holding anti-parasite substances, according to the present claim 1 comprises at least one rigid or flexible surface, provided monolaterally or bilaterally with a series of complementary cells, placed at constant distance in horizontal, vertical and oblique direction, having an external opening large enough to permit the simple insertion of an anti-parasite substance, each cell comprising a receptacle portion which as an enlarged shape and an arrangement with respect to their openings, such that, in any direction the structure is employed, at least one receptacle is adapted for the gravitational hold of the inserted anti-parasite product.

Conveniently, each cell takes an enlarged shape with a receptacle portion placed inside the structure for holding the anti-parasite substance.

Preferred features of the invention are set out in the dependent claims.

Conveniently, on the two surfaces forming the structure, there are bilateral bulges consisting of a series of complementary cells, placed so that, in any position, the receptacle (3) of a cell results in the opposite position to the receptacle of the cell placed on the other side of the structure.

Conveniently, the cells placed on the same side are parallel each other, differently directed, but in such a position that the receptacle of a row is in the opposite position to the receptacle of the cells in the next row; in this way a row of cells with the receptacle downwards alternates with the row of cells with the receptacle upwards.

Conveniently, the structure is coloured, preferably yellow with red spots, in order to better attract the animal to be caught.

Conveniently, the invention essentially consists of a mono or bilateral cell structure, made of plastic films in polyethylene or other materials such as the so-called "nonwoven fabric", anyhow in rigid or semi-rigid structures, made of expanded polystyrene or light plastics, however handy, or any other existing material technologically suitable to be processed for giving the surface the particular shape of the invention, acting as physical barrier for the plant we want to protect from parasite attack.

Conveniently, the invention is made of flexible plastic film, easy to be manufactured with the current technologies of the rotary machines by flat or levelled extruders, machines for matching plastic films or any other industrial method of production.

The main advantage of this invention is the particular shape of the cells that, regardless of their position, can always hold part of the anti-parasite substance. This structure with cells differently directed, forming in any position a gravitational hold receptacle, permits the uniform distribution and hold of the liquid over the entire surface of the protective film, also thanks to the sufficient quantity given by the capacity of the cells. This characteristic is related to the precise shape of each cell, as well as to the successive arrangement of its complementary cells. The same drawing with analogous receptacle section, symmetrically repetitive in horizontal and vertical and mirror reflected in diagonal at 45°, permits the above-mentioned universal application, which means the accessory can be applied without requiring any direction tie of the protective film. Since such an application is not tied to any position prefixed by the user, this invention can be used by everyone, with no need of experts, and is even accessible to the market range of "house gardeners", therefore for house, also suitable for single or however limited number of applications.

Another advantage of this invention is the effective possibility to be applied in larger areas, such as large crops or, more specifically, factories with serial productions of the most various kinds of flowers and plants.

As a matter of fact, the same innovative concept of holding with cells, can equally be realized on any form of rigid panel, made of plastic material, resulting more suitable in the serial manufacture of protections, geometrically placed in rows, like the best positions used by technicians of this field for the conservation and grow of their products. In practice, by means of said panels having surfaces with this cell structure, it's possible to create barriers bordering the rows of plants, so as to get the same protection extended in time, thanks to the hold of the substance by the cells.

The versatility of this technical solution makes it possible to be applied for various practical solutions concerning different technical applications, solving many existing problems until now never specifically tackled with such an efficacy as the one obtained from this invention. As a matter of fact, the same concept can be effectively used, regardless of the material and shape employed, in order to get rid of insects and parasites from tents, by means of a simple and ready application with a semi-rigid plastic film easy to be applied to the external surface of the same tent; otherwise, the same innovative concept with the same cell structure can be largely used in every public place equipped with awnings outside, mainly employed during seasons when insects give greater problems, particularly when food is concerned. Also in this case, simply placing the film over the existing awning, possibly compatible in colours, it's possible to get advantages never reached until now with the anti-aesthetic apparatus currently used for this purpose.

When the structure is used for private places, houses, restaurants or similar, it is made of expanded polystyrene or light and handy plastic. It is yellow with red-orange spots.

Since it is a structure to be applied inside or outside social places, it can include flower drawings like daisies or sunflowers. This structure can also provide a support for collecting the dead insects in order to avoid their fall on the floor.

The sizes can range from a minimum of 1 square meter of primarily rectangular area. The surface must have pigments and the single pigment ranges from 0.5 to 2 cm of diameter. The cavity of the pigment has a shape able to keep the anti-parasite substance.

The pigments are placed on the two sides of the panel so that the row of pigments with the cavity downwards on a side corresponds to the row of pigments with the cavity upwards on the opposite side, which is for practicability of manufacture and application of the structure.

The pigments form parallel rows on the greater side of the rectangle and the cavities are directed downwards for a row and upwards for another so that, according to the way the rectangular panel is applied (greater side parallel to the floor or ceiling), the rows of pigments can hold the substance.

The structure for social use can also be made of semi-rigid plastic film with pigments, to be attached by means of straps over tents or outer awnings for houses or public places. Sizes range according to the size of the tents or awnings.

On the contrary, when the structure is used in rural places, such as stables, dairies, paddocks for animals, it can always be made of expanded polystyrene or light and handy plastic, it is yellow with red-orange spots and the sizes can range from a minimum of 1 square meter of primarily rectangular area.

The surface must have pigments and the single pigment ranges from 0.5 to 2 cm of diameter. The cavity of the pigment has a shape able to keep the anti-parasite substance.

When the structure is used for getting rid of dipterous and/or fly parasites of the crops, it must be made of a very light film in polyethylene or nonwoven fabric, with pigments of greater sizes so that the anti-parasite treatments can be carried out directly on the film structures and not on the crops.

The films, wound and sold in reels, according to their manufacturing, may have cells either on one side or both sides, always on condition that the pigment directed downwards on one side corresponds to the opposite pigment directed upwards.

Conveniently, the polyethylene structure must be punctured in order to let air pass through and prevent wind destroying it.

The same kind of manufacturing design is also suitable for the film structure in nonwoven fabric.

This is the way this structure is used:

If the structure in plastic film or flexible nonwoven fabric is concerned, it will be applied onto the plant or any other item to be protected; later the anti-parasite product will be sprayed onto the structure, and not directly onto the plant as we used to do.

In the case we want to protect a place using rigid panels, it will be sufficient to apply said panels in a part of it or cover a tent or awning with said panels where the anti-parasite product will then be sprayed.

### Brief description of drawings

The characteristics of the present invention can be better understood by every expert in this field, referring to the enclosed drawings, given as practical examples of the invention, but not to be considered restrictive.

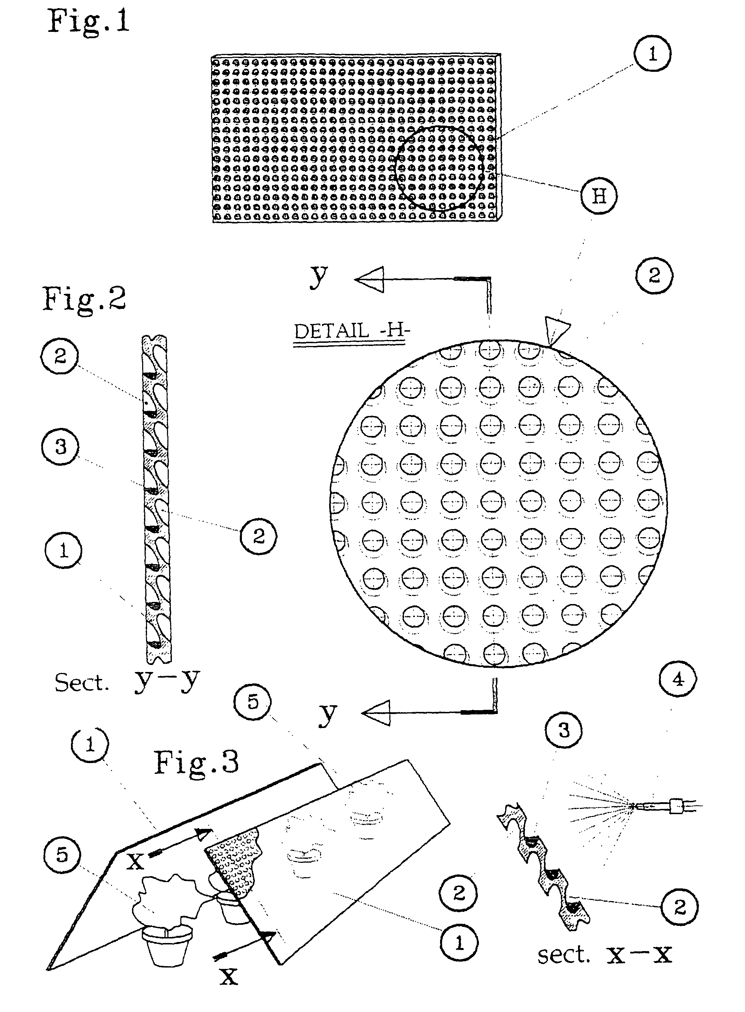

- Fig. 1 shows a general portion of the structure (1) holding the anti-parasite substance, with the "H" detail, enlarged in Fig. 2 with the relative diagonal section Y-Y, showing the various holes (2) placed at constant distance over the entire surface of the structure, which comprise inside a receptacle (3) holding the attracting and killing substance against insects and parasites. The smell attraction of the substance can be intensified by the particular colour effect of the surface of the same structure. The section in Fig. 2 also shows the bilateral feature of the invention, constituted by cells on both sides opposite directed, which considerably facilitates the application of the product.
- Fig. 3 shows a general assembling of the structure with rigid panels (1) over a hypothetical row of plants (5), illustrating in this way the possible application of the invention in places for the cultivation and sale of plants, greenhouses, and similar. The relative section x-x shows that, thanks to the particular shape of the cells, the product sprayed by suitable tool (4) over the surface of the invention (1) is held and homogeneously distributed inside the same cells (3).

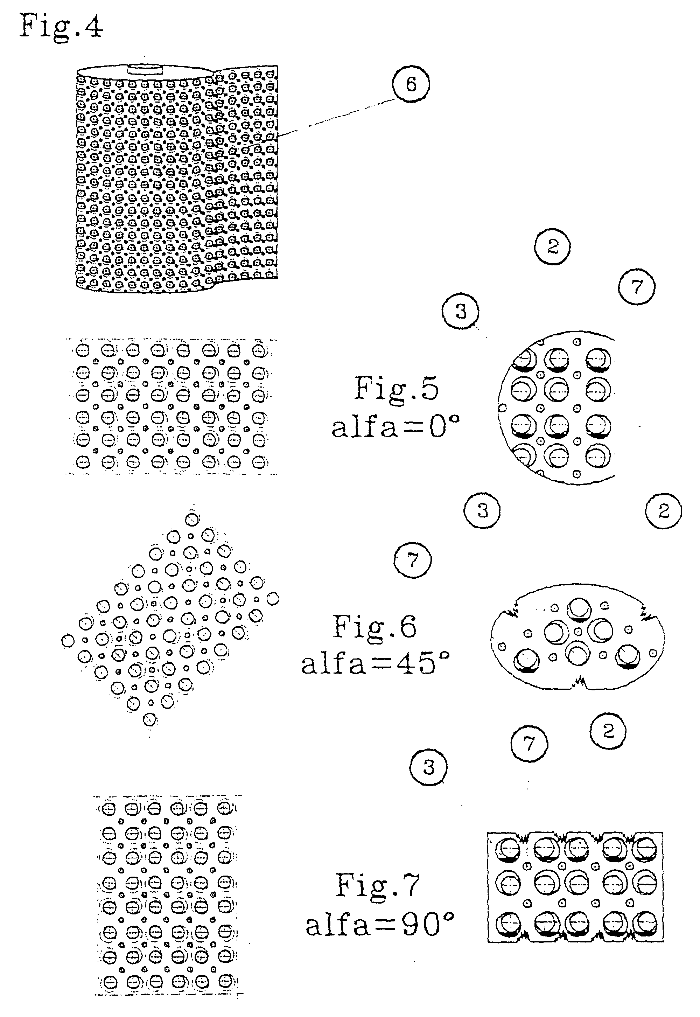

- Fig. 4 shows a reel of plastic film (6) made of nonwoven fabric, which, thanks to its capability of folding up, permits many practical solutions; this concept is made even more universal by the proper arrangement of the receptacles that, as depicted in the following Figs. 5, 6, 7, thanks to their reciprocal direction, hold however part of the anti-parasite liquid well distributed over the entire surface, regardless of the position of the same film. Also this kind of plastic film has cells on both sides opposite directed.

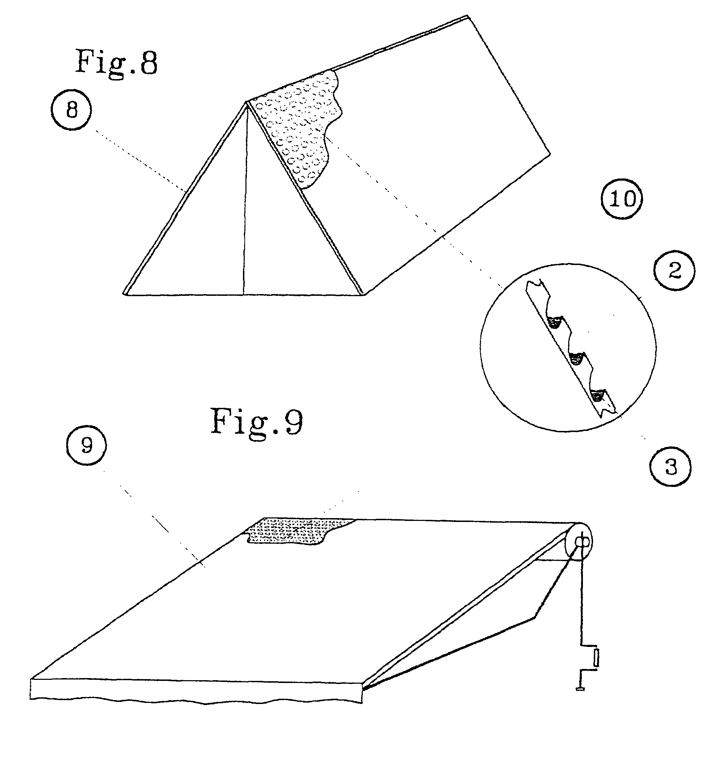

- Figs. 8 and 9 show the application of the invention over a tent and an awning, like the one generally found in public places or in house verandas. They represent two of the numerous practical solutions of the invention, in this case made of semi-rigid plastic film (10), but with same concept of cell structure (2-3).

## Claims

1. Protective structure (1) for holding anti-parasite substances, comprising at least one rigid or flexible surface, provided monolaterally or bilaterally with a series of complementary cells (2), placed at constant distance in horizontal, vertical and oblique direction, having an external opening large enough to permit the simple insertion of an anti-parasite substance, each cell comprising a receptacle portion (3) **characterised in that** said receptacle portion (3) of said cells have an enlarged shape and an arrangement with respect to their openings, such that, in any direction the structure is employed, at least one receptacle is adapted for the gravitational hold of the inserted anti-parasite substance.

2. Structure (1) according to claim 1, **characterized in that** it comprises, on both two surfaces, bilateral bulges consisting of a series of complementary cells (2), placed so that, in any position, the receptacle (3) of a cell (2) results in the opposite position to the receptacle (3) of the cell (2) placed on the other side of the structure (1).

3. Structure (1) according to claim 1, **characterized in that** the cells (2) placed on the same side are parallel each other, differently directed, but in such a position that the receptacle (3) of a row is in the opposite position to the receptacle (3) of the cells (2) in the next row; in this way a row of cells (2) with the receptacle (3) downwards alternates with the row of cells (2) with the receptacle (3) upwards.

4. Structure (1) according to claim 1, **characterized in that** it is coloured, preferably yellow with red spots, in order to better attract the animal to be caught.

5. Structure (1) according to claim 1, **characterized in that** it is made of flexible plastic films in polyethylene or other materials such as the nonwoven fabric.

6. Structure (1) according to claim 1, **characterized in that** it is punctured in order to let air pass through and prevent wind destroying it.

7. Structure (1) according to claim 1, **characterized in that** it consists of rigid (1) or semi-rigid structures made of expanded polystyrene or light plastics, however handy, or any other existing material technologically suitable to be processed for giving the surface the particular shape of the invention, acting as physical barrier for the plant or environment we want to protect from parasite attack.

8. Structure (1) according to claim 1, **characterized in that** the cell (2) sizes range from 0.5 to 2 cm of diameter.

9. Structure (1) according to claim 1, **characterized in that**, when it is made of reels in polyethylene or nonwoven fabric or similar, the anti-parasite product is sprayed directly on the same structure and not on the plant or any other item to be protected.

10. Structure (1) according to claim 1, **characterized in that**, when it is made of rigid panels (1), they are installed in a part or over the place to be protected, and the anti-parasite product is sprayed directly onto said panels (1).

## Patentansprüche

1. Eine schuetzende Struktur (1) um anti-parasitaer Substanzen zu beinhalten, die zumindest eine feste oder weiche Oberflaeche enthaelt, einseitig oder zweiseitig versehen mit einer Reihe komplementaerer Zellen, die in regelmaessigen Abstaenden in horizontaler, vertikaler und obliquer Richtung angordnet sind und eine aeussere Oeffnung haben, welche gross genug ist, um eine einfache Einfuehrung Anti-parasitaerer Subtanzen zu erlauben. Jede Zelle umfasst einen rezeptorischen Teil (3), **gekennzeichnet dadurch dass** besagter rezeptorischer Teil (3) der besagten Zellen etwas goesser ist und eine Oeffnung hat, so dass, egal in welcher Richtung die Struktur eingesetzt wird, zumindest ein Rezeptor fuer den Gravitationshalt der Antiparasitaeren Substanz vorhanden ist.

2. Eine Struktur (1) wie in Patentanspruch 1, **gekennzeichnet dadurch dass** es auf beiden Oberflaechen beidseitige Vorspruenge gibt, die aus einer Reihe komplementaerer Zellen besteht (2) und so platziert sind, dass in jeder Position der Rezeptor(3) der Zelle (2) in der entgegengesetzten Position zu dem Rezeptor (3) der Zelle(2) steht, die sich auf der anderen Seite der Struktur befindet.

3. Eine Struktur (1) nach Patentanspruch 1, **dadurch gekennzeichnet dass** die Zellen(2) auf derselben Seite parallel zueinander angeordnet sind, in unterschiedlicher Richtungen ausgerichtet sind, aber in solch einer Position, dass der Rezeptor (3) der einen Reihe in entgegengesetzter Position zu dem Rezeptor (3) der Zelle (2) der naechsten Reihe steht. Auf diese Weise wechselt eine Reihe von Zellen (2) mit nach unten gerichteten Rezeptoren mit einer Reihe nach oben gerichteter Rezeptoren (3) ab.

4. Eine Struktur (1) wie in Patentanspruch 1, **dadurch gekennzeichnet dass** es farbig ist, vorzugsweise gelb mit roten Punkten, so dass die Tiere besser angezogen werden.

5. Eine Struktur (1) wie in Patentanspruch 1, **dadurch gekennzeichnet dass** es aus einem flexiblem Plastikfilm aus Polyethylenen oder aehnlichem Material wie nicht gewebten Stoffen besteht.

6. Eine Struktur (1) wie in Patentanspruch 1, **dadurch gekennzeichnet dass** es geloechert ist so dass Luft hindurchkommt und nicht durch Wind zerstoert wird.

7. Eine Struktur (1) wie in Patentanspruch 1, **dadurch gekennzeichnet dass** sie aus einer festen oder halbfesten Struktur besteht, die aus ausgedehnten Polytstrenen oder leichtem Plastik besteht, jedenfalls handlich oder jedem anderen technologisch geeigneten Material das so verarbeitet werden kann um die entsprechende Form der Erfindung herzustellen, die als physische Barriere fuer die Pflanze oder die Umgebung, die wir von dem Parasitenbefall schuetzen wollen, dient.

8. Eine Struktur (1) wie in Patentanspruch 1, **dadurch gekennzeichnet dass** die Zellengoesse (2) zwischen 0,5 und 2cm variiert.

9. Eine Struktur (1) wie in Patentanspruch 1, **dadurch gekennzeichnet, dass** wenn es aus Polyethylenen oder Rollen aus nicht gewebten Stoff ist, das antiparasitaere Produkt direkt auf dieselbe Struktur gesprueht wird und nicht auf die Pflanze oder die Umgebung, die geschuetzt werden soll.

10. Eine Struktur (1) wie in Patentanspruch 1, **dadurch gekennzeichnet dass** , wenn es aus hartem Panelen (1) besteht, sie in einem Teil oder ueber dem zu beschuetzenden Platz angebracht werden und das antiparasitaere Mittel direkt auf besagte Panelen (1) gesprueht wird.

## Revendications

1. Structure protectrice (1) pour contenir les substances anti-parasites, comprenant au moins une surface rigide ou flexible, pourvue d'un ou des deux cotés d'une série de cellules complémentaires (2), situées à une distance constante selon une direction horizontale, verticale ou oblique, ayant une ouverture externe suffisamment large pour permettre la simple insertion d'une substance anti-parasite, chaque cellule comprenant une partie réceptacle (3) **caractérisée par** la fait qu'une telle partie réceptacle (3) de telles cellules ont une forme élargie et une disposition par rapport aux ouvertures, de telle façon que, dans toutes les directions d'utilisation de la structure, au moins un réceptacle est adapté à la prise gravitationnelle de la substance anti-parasite insérée,

2. Structure (1) selon la revendication 1, **caractérisée par le fait qu'**elle comprend, sur les deux surfaces, des renflements bilatéraux consistant en une série de cellules complémentaires (2), situées de telle façon que, quelque soit la position, le réceptacle (3) d'une cellule (2) résulte en une position opposée au réceptacle (3) de la cellule (2) placée de l'autre coté de la structure (1)

3. Structure (1) selon la revendication 1, **caractérisée par le fait que** les cellules (2) situées du même coté sont parallèles entre elles, selon des directions différentes, mais selon une position telle que le réceptable (3) d'une rangée est selon une position opposée au réceptacle (3) des cellules (2) de la rangée suivante ; de cette façon une rangée de cellules (2) avec le réceptacle (3) vers le bas s'alterne à une rangée de cellules (2) avec le réceptacle (3) vers le haut,

4. Structure (1) selon la revendication 1, **caractérisée par le fait qu'**elle est colorée, de préférence en jaune avec des points rouge pour mieux attirer l'animal à attraper,

5. Structure (1) selon la revendication 1, **caractérisée par le fait qu'**elle est faite d'un film plastique flexible en polyéthylène ou bien d'un tout autre matériau comme un tissu non-tissé

6. Structure (1) selon la revendication 1, **caractérisée par le fait qu'**elle est trouée pour y laisser passer l'air au travers et empêcher le vent de le détruire,

7. Structure (1) selon la revendication 1, **caractérisée par le fait qu'**elle consiste en des structures (1) rigides ou semi-rigides faites en polystyrène expansé ou en plastique léger, cependant maniables, ou tout autre matériau existant technologiquement adapté au procédé pour donner à la surface la forme particulière de l'invention, agissant comme barrière physique pour l'installation ou l'environnement que nous voulons protéger de l'attaque des parasites,

8. Structure (1) selon la revendication 1, **caractérisée par le fait que** les cellules ont une taille de l'ordre de 0,5 à 2 cm de diamètre.

9. Structure (1) selon la revendication 1, **caractérisée par le fait que**, quand elle est constituée de bobines de polyéthylène ou en tissu non-tissé ou de matériau similaire, le produit anti-parasite est vaporisé directement sur cette même structure et non sur l'installation ou sur tout autre article à protéger

10. Structure (1) selon la revendication 1, **caractérisée par le fait que**, quand elle est faite de panneaux rigides (1), elles sont installées d'un coté ou sur l'endroit à protéger, et le produit anti-parasite est vaporisé directement sur les panneaux cités ci-dessus.
